# EUROPÄISCHE PATENTSCHRIFT

(11) **EP 3 146 798 B1**
(45) Veröffentlichungstag und Bekanntmachung des Hinweises auf die Patenterteilung: **22.07.2020**
(21) Anmeldenummer: 15727325.1
(22) Anmeldetag: 21.05.2015
(51) Int. Cl.: H05B 3/84, H01R 4/62, H01R 4/02, H01B 1/02, H01R 43/02

(54) **ELEKTRISCHES ANSCHLUSSELEMENT ZUM BEFESTIGEN, INSBESONDERE AUFLÖTEN AUF EINE GLASSCHEIBE SOWIE BANDLITZENMISCHGEFLECHT**
ELECTRICAL CONNECTION ELEMENT TO BE FIXED ESPECIALLY PBY SOLDERING ON A GLASS PANE AND A BAND BRAID OF DIFFERENT MATERIALS
ELEMENT DE LIAISON ELECTRIQUE POUR FIXATION EN PARTICULIER PAR SOUDURE SUR UNE SURFACE EN VERRE AINSI QU'UNE TRESSE CONDUCTRICE A BASE DE DIFFERENT MATERIAUX

(30) Priorität: 23.05.2014 DE 202014004267 U
(43) Veröffentlichungstag der Anmeldung: 29.03.2017
(73) Patentinhaber: FEW Fahrzeugelektrikwerk GmbH & Co. KG, 04442 Zwenkau (DE)
(72) Erfinder: SCHNEIDER, Björn, 04416 Markkleeberg (DE); JENRICH, André, 04158 Leipzig (DE); HARTMANN, Werner, 04205 Leipzig (DE)
(74) Vertreter: Kruspig, Volkmar
(86) Internationale Anmeldenummer: PCT/EP2015/061207
(87) Internationale Veröffentlichungsnummer: WO 2015/177260

(56) Entgegenhaltungen:
- EP-A1- 2 209 161
- WO-A1-2013/004434
- DE-T2- 69 514 199

## Beschreibung

Die Erfindung betrifft ein elektrisches Anschlusselement zum Auflöten auf eine Glasscheibe und dort vorhandene leitfähige Abschnitte, insbesondere auf eine Fahrzeugscheibe, bestehend aus einem Lötanschlussteil sowie einem, am Lötanschlussteil durch Verschweißen fixierten Bandlitzenabschnitt gemäß Oberbegriff des Anspruchs 1.
Aus der DE 691 02 964 T2 ist elektrisches Anschlussstück für eine beheizte Fahrzeugscheibe vorbekannt. Das Anschlusselement soll dem Herstellen einer elektrischen Verbindung zu einer auf der Autoglasscheibe angeordneten Leitschicht dienen und besitzt diesbezüglich einen flexiblen Drahtlitzenabschnitt und einen an einem Ende der Drahtlitze angeordneten Stecker sowie ein am gegenüberliegenden Ende befindliches Lötanschlussteil.

Gemäß der DE 691 02 964 T2 besteht der flexible Drahtlitzenabschnitt beispielsweise aus einem Kupfergewebeband mit etwa rechteckigem Querschnitt. Mit einem Ende des Drahtlitzenabschnitts ist ein zungenartiger Flachstecker verschweißt, auf den beim Anschluss an das Bordnetz eine entsprechende Flachsteckerkupplung aufgeschoben werden kann.

Der weitere Endbereich des Drahtlitzenabschnitts ist mit einem starren Blechteil verbunden, und zwar durch einen Schweißvorgang. Dieses Blechteil bildet den eigentlichen Lötfuß. Hier kann es sich um einen Blechabschnitt handeln, dessen Breite und Länge den jeweiligen Anforderungen angepasst ist. Beispielsweise besteht der Blechabschnitt aus Kupferblech. Das Lötanschlussteil kann eine Kröpfung, insbesondere ein gekröpftes Mittelteil aufweisen, um eine verformbare Brücke zu bilden, die die durch die unterschiedliche Wärmeausdehnung des Glases und des aufgelöteten Blechteils entstehenden Wärmespannungen abbaut.

Da das Lötanschlussteil aus Kupfer besteht, ergibt sich der Nachteil, dass die Ausdehnung bei Temperaturänderung sich anders verhält als die Ausdehnung der entsprechenden Glasscheibe. Um den hierdurch bedingten mechanischen Stress zu reduzieren, kommen bisher überwiegend bleihaltige, duktile Lötlegierungen zur Verbindung des Lötanschlussteils mit der Scheibe zum Einsatz.

Um nun den Anforderungen zur Vermeidung bleihaltiger Lote zu genügen, werden zunehmend Lotmaterialien verwendet, die einen ähnlichen oder gleichen Ausdehnungskoeffizienten wie das Glas selbst besitzen.

Der Einsatz von bleifreien Lotmaterialien erfordert neue Ansätze für die Ausbildung elektrischer Anschlüsse mit entsprechenden Folgen und Auswirkungen im technologischen Ablauf, respektive bei den Fertigungsprozessen. Wenn bezüglich der Lötanschlussteile Materialien Verwendung finden, die einen anderen Schmelzpunkt als Kupfer besitzen und diesbezüglich Schweißverbindungen genutzt werden, besteht die Gefahr, dass aufgrund der beim Schweißen entstehenden bzw. für den Schweißprozess erforderlichen Temperaturen die Materialien der Drahtlitze, d.h. des Bandleiters, einer zu hohen thermischen Belastung unterliegen, insbesondere ausglühen und spröde werden. Eine solche Sprödigkeit des Bandlitzenleiters verschlechtert signifikant die Festigkeit des elektrischen Anschlusselements.

Aus der DE 695 14 199 T2 ist ein elektrisches Verbindungselement für beheizbare Glasscheiben für Kraftfahrzeuge vorbekannt.

Bei dieser gattungsbildenden Lehre geht es darum, Nachteile bei dem Verlöten von Rundkabeln als Drahtlitzenabschnitte zu vermeiden. Insofern wird dort ein Flachgewebeband als Drahtlitzenabschnitt mit einem runden Kontaktstift versehen, wobei im Übergangsbereich ein metallisches Reduzierstück angeordnet ist, dass mit dem Endabschnitt der Drahtlitze verschweißt oder verlötet wird.

Die EP 2 209 161 A1 bezieht sich auf das Ausführen von Verbindungsanschlüssen bei Hochtemperatursensoren, insbesondere Abgashochtemperatursensoren, die unter entsprechender Temperaturbelastung und rauen Umweltbedingungen eingesetzt werden.

Aus dem Vorgenannten ist es Aufgabe der Erfindung, ein weiterentwickeltes elektrisches Anschlusselement zum Auflöten auf eine Glasscheibe und dort vorhandene leitfähige Abschnitte, insbesondere auf eine Fahrzeugscheibe anzugehen, wobei das Anschlusselement aus einem Lötanschlussteil sowie einem am Lötanschlussteil durch Verschweißen fixierten Bandlitzenabschnitt besteht. Das elektrische Anschlusselement soll einerseits über eine ausreichende elektrische Leitfähigkeit verfügen sowie andererseits die technologisch bedingten Anforderungen, insbesondere in thermischer Hinsicht überstehen, ohne dass eine signifikante Beeinträchtigung der Zugfestigkeit und weiterer mechanischer Eigenschaften eintritt.

Die Lösung der Aufgabe der Erfindung erfolgt durch ein elektrisches Anschlusselement gemäß der Merkmalskombination nach Anspruch 1, wobei die Unteransprüche zweckmäßige Ausgestaltungen und Weiterbildungen umfassen.

Es wird demnach von einem elektrischen Anschlusselement zum Befestigen, d. h. Auflöten auf eine Glasscheibe und dort vorhandene leitfähige Abschnitte ausgegangen. Bei der Glasscheibe handelt es sich insbesondere um eine Fahrzeugscheibe. Das elektrische Anschlusselement besteht aus einem Lötanschlussteil sowie einem am Lötanschlussteil durch Verschweißen fixierten Bandlitzenabschnitt.

Das dem Lötanschlussteil gegenüberliegende Ende des Bandlitzenabschnitts kann mit einem weiteren elektrischen Anschlusselement, z.B. einem Flachstecker oder einer Flachsteckerbuchse in bekannter Weise verbunden sein.

Erfindungsgemäß besteht der Bandlitzenabschnitt, d.h. der Bandlitzenleiter, aus einem Mischgeflecht.

Dieses Mischgeflecht enthält neben Einzeldrähten aus Kupfer oder einer Kupferlegierung eine Menge von Einzeldrähten aus einem solchen Material, welches eine Schmelztemperatur aufweist, die im Wesentlichen der Schmelztemperatur des Lötanschlussteils entspricht oder eine diesbezüglich höhere Schmelztemperatur besitzt.

Insbesondere dann, wenn das Lötanschlussteil mit dem Bandlitzenabschnitt durch Widerstandsschweißen mit entsprechender thermischer Belastung verbunden wird, übernimmt die Menge von Einzeldrähten mit im Vergleich zu Kupfer höherer Schmelztemperatur die Aufgabe des Erhalts der Zugfestigkeit des Bandlitzenleiters. Damit wirkt sich ein auftretendes Ausglühens einzelner, aus elektrischen Gründen weiterhin vorteilhaft vorzusehender Kupferdrähte nicht nachteilig auf die gewünschten mechanischen Eigenschaften des Bandlitzenleiters aus.

Erfindungsgemäß weist das Mischgeflecht Einzeldrähte aus ferritischem Chromstahl auf.

Hierbei kann es sich um Einzeldrähte aus X₆Cr₁₇-Material handeln.

Der Anteil der Einzeldrähte mit angepasster Schmelztemperatur im Geflecht liegt im Bereich zwischen im Wesentlichen 15% bis 85%, bevorzugt im Bereich zwischen 40% und 60%.

Bei einer Ausführungsform ist das Lötanschlussteil als Brücke mit mindestens einem erhabenen Abschnitt ausgebildet, der im Montagezustand zur Scheibe einen vorgegebenen Abstand aufweist.

Erfindungsgemäß besteht das Lötanschlussteil aus einer Stahllegierung, d.h. aus einer solchen Legierung, die für eine bleifreie Lötung mit der Scheibe ausdehnungskoffizientenseitig bestens geeignet ist.

Das Bandlitzenmischgeflecht für das elektrische Anschlusselement bestehtaus elektrisch hochleitfähigen Einzeldrähten sowie Einzeldrähten, welche eine hohe Zugfestigkeit besitzen. Dieses Mischgeflecht ist also im Ergebnis ein ausgezeichneter elektrischer Leiter mit optimalen Zugfestigkeitseigenschaften. Durch die üblicherweise bei einem Geflecht durch die Webtechnologie sich ergebende enge Verbindung der Einzeldrähte ergibt sich ein neues, funktional breit einsetzbares Material, das sowohl hohe Temperaturbelastungen beim Schweißen übersteht, andererseits aber auch in klassischer Form verarbeitbar ist.

Die Einzeldrähte des Bandlitzenmischgeflechts umfassen mindestens die Materialien Kupfer und Edelstahl.

Der Anteil der Einzeldrähte aus Edelstahl liegt bei im Wesentlichen 15% bis 85% bezogen auf die Gesamtzahl der Drähte des Geflechts.

In weiterer Ausgestaltung der Erfindung können die Einzeldrähte aus einem Hybridmaterial bestehen, das sowohl die gewünschten elektrischen als auch mechanischen Eigenschaften besitzt und insbesondere solche Eigenschaften aufweist, die dazu führen, dass bei einer thermischen Belastung, insbesondere durch Schweißen, die angestrebten und gewünschten Zugfestigkeitswerte erhalten bleiben.

Die Erfindung soll nachstehend anhand eines Ausführungsbeispiels näher erläutert werden.

Bekannte elektrische Anschlusselemente für Fahrzeugscheiben bestehen aus dem eigentlichen Lötobjekt und Lötlegierung sowie Bandlitze und einer Schnittstelle zur Bordelektronik, beispielsweise ausgeführt als klassischer 6,3 mm Flachstecker nach DIN 46244. Das Lötobjekt und die Bandlitze sowie die Bandlitze und die Schnittstelle zur Bordelektronik können per elektrischem Widerstandsschweißen verbunden werden.

Beim Widerstandsschweißen wird auf die zu verbindenden Materialien ein entsprechender Strom appliziert. An den Stellen, an denen elektrische Widerstände vorhanden sind, wird Wärme erzeugt. Die größten Widerstände bestehen zum einen am Übergang vom Kupfergeflecht zum Lötobjekt und zum anderen an den Stellen, an denen die Elektroden der Widerstandsschweißanordnung die Materialien berühren. Das Widerstandsschweißen unterschiedlicher Materialien kann zu den in der Beschreibungseinleitung geschilderten Schwierigkeiten führen.

Gemäß Ausführungsbeispiel wird nun der Aufbau des Geflechts geändert. Es werden nicht wie üblich ausschließlich Kupfereinzeldrähte zu einem Bandlitzenleiter gewebt. Vielmehr werden Einzeldrähte eingesetzt, die eine ähnliche Schmelztemperatur wie das Lötobjekt, beispielsweise Edelstahl aufweisen. Weiterhin werden im Mischgeflecht Kupfereinzeldrähte eingebunden.

Während des Verschweißens des Geflechts gemäß Ausführungsbeispiel mit dem Lötobjekt, welches einen an das Scheibenglas angepassten Ausdehnungskoeffizienten besitzt, kommt es zwar mindestens teilweise bei den Kupferlitzen oder Kupferdrähten aufgrund des hohen Eintrags einer Energie zu einer Schädigung. Diese Schädigung des Kupfermaterials in mechanischer Hinsicht wird kompensiert durch den Teil des Geflechts, der aus den Einzeldrähten des zweiten Materials, beispielsweise Edelstahl besteht. Insgesamt wird eine erhöhte Zugfestigkeit der Schweißstelle erreicht.

Im Ergebnis durchgeführter Versuche wurde ermittelt, dass das Geflecht zu 15% bis 85%, vorzugsweise 40% bis 60%, aus Einzeldrähten des zweiten Materials, vorzugsweise Edelstahl 1.4016 besteht, um die Vorteile beim Schweißen des Geflechts auf ein Lötobjekt aus Material mit an Glas angepasstem Ausdehnungskoeffizienten zu erhalten. Der erforderliche höhere Eintrag an Energie zum Erhalt der Schweißverbindung lässt zwar Kupfereinzeldrähte ausglühen, beeinflusst jedoch nicht die Eigenschaften der Edelstahleinzeldrähte. Damit erhöht sich die Zugfestigkeit der Gesamtanordnung signifikant und liegt nicht wie bei reinen Bandlitzenleitern aus Kupfer bei Werten unter 100 N.

## Patentansprüche

1. Elektrisches Anschlusselement zum Auflöten auf eine Glasscheibe und dort vorhandene leitfähige Abschnitte, insbesondere auf eine Fahrzeugscheibe, bestehend aus einem Lötanschlussteil sowie einem am Lötanschlussteil durch Verschweißen fixierten Bandlitzenabschnitt,
**dadurch gekennzeichnet, dass**
der Bandlitzenabschnitt aus einem Mischgeflecht besteht, welches neben Einzeldrähten aus Kupfer oder einer Kupferlegierung Einzeldrähte aus einem Material enthält, welches eine Schmelztemperatur aufweist, die im Wesentlichen der Schmelztemperatur des Lötanschlussteils entspricht oder eine diesbezüglich höhere Schmelztemperatur besitzt, wobei das Mischgeflecht Einzeldrähte aus ferritischem Chromstahl aufweist und das Lötanschlussteil aus einer für eine bleifreie Lötung mit der Glasscheibe geeigneten Stahllegierung besteht.

2. Elektrisches Anschlusselement nach Anspruch 1,
**dadurch gekennzeichnet, dass**
die Edelstahleinzeldrähte aus X₆Cr₁₇-Material bestehen.

3. Elektrisches Anschlusselement nach einem der vorangegangenen Ansprüche,
**dadurch gekennzeichnet, dass**
der Anteil der Einzeldrähte mit angepasster Schmelztemperatur im Geflecht im Bereich zwischen im Wesentlichen 15% bis 85%, bevorzugt im Bereich zwischen im Wesentlichen 40% bis 60% liegt.

4. Elektrisches Anschlusselement nach einem der vorangegangenen Ansprüche.
**dadurch gekennzeichnet, dass**
das Lötanschlussteil als Brücke ausgebildet ist.

5. Elektrisches Anschlusselement nach einem der vorangegangenen Ansprüche,
**dadurch gekennzeichnet, dass**
das Lötanschlussteil aus einer Stahllegierung oder einem Material mit an die Glasscheibe angepasstem Ausdehnungskoeffizienten besteht.

## Claims

1. An electrical connection element for soldering on a glass pane and conductive portions present there, in particular on a vehicle pane, composed of a solder connection part and a band braid part fixed to the solder connection part by welding,
**characterized in that**
the band braid part is composed of a mixed mesh, which, apart from single wires of copper or a copper alloy, contains single wires of a material having a melting temperature corresponding substantially to the melting temperature of the solder connection part or having a higher melting temperature in this respect, wherein the mixed mesh has single wires of a ferritic chromium steel, and the solder connection part is composed of a steel alloy suitable for a lead-free solder joint with the glass pane.

2. The electrical connection element according to claim 1,
**characterized in that**
the single wires of stainless steel are composed of an X₆Cr₁₇ material.

3. The electrical connection element according to any one of the preceding claims,
**characterized in that**
the proportion of the single wires having an adapted melting temperature within the mesh is in the range of between substantially 15% to 85%, preferably in the range of between substantially 40% to 60%.

4. The electrical connection element according to any one of the preceding claims,
**characterized in that**
the solder connection part is formed as a bridge.

5. The electrical connection element according to any one of the preceding claims,
**characterized in that**
the solder connection part is composed of a steel alloy or a material having an expansion coefficient adapted to the glass pane.

## Revendications

1. Élément de connexion électrique à braser sur une vitre en verre et sur des portions conductrices qui y sont présentes, en particulier sur une vitre de véhicule, constitué d'une partie de connexion à braser et d'une portion de brin en ruban fixée par soudage à la partie de connexion à braser,
**caractérisé en ce que**
la portion de brin en ruban est constituée d'un treillis mixte qui, outre des fils individuels en cuivre ou en alliage de cuivre, comprend des fils individuels en un matériau qui présente une température de fusion qui correspond sensiblement à la température de fusion de la partie de connexion à braser ou qui possède une température de fusion supérieure à celle-ci, le treillis mixte comportant des fils individuels en acier ferritique au chrome et la partie de connexion à braser étant constituée d'un alliage d'acier adapté au brasage sans plomb avec la vitre.

2. Élément de connexion électrique selon la revendication 1,
**caractérisé en ce que**
les fils individuels en acier inoxydable sont constitués en matériau X₆Cr₁₇.

3. Élément de connexion électrique selon l'une des revendications précédentes,
**caractérisé en ce que**
la part de fils individuels ayant une température de fusion ajustée dans le treillis se situe dans la plage comprise sensiblement entre 15 % et 85 %, de préférence dans la plage comprise sensiblement entre 40 % et 60 %.

4. Élément de connexion électrique selon l'une des revendications précédentes,
**caractérisé en ce que**
la partie de connexion à baser est réalisée sous forme de pont.

5. Élément de connexion électrique selon l'une des revendications précédentes,
**caractérisé en ce que**
la partie de connexion à braser est constituée d'un alliage d'acier ou d'un matériau dont le coefficient de dilatation est adapté à la vitre en verre.
